# EUROPÄISCHE PATENTSCHRIFT

(11) **EP 3 759 397 B1**
(45) Veröffentlichungstag und Bekanntmachung des Hinweises auf die Patenterteilung: **05.04.2023**
(21) Anmeldenummer: 19705522.1
(22) Anmeldetag: 18.02.2019
(51) Int. Cl.: F24C 15/20

(54) **TISCHLÜFTER UND VERFAHREN ZUM REINIGEN EINES TISCHLÜFTERS**
TABLE HOOD AND METHOD FOR CLEANING A TABLE HOOD
HOTTE DE TABLE ET PROCÉDÉ SERVANT À NETTOYER UNE HOTTE DE TABLE

(30) Priorität: 27.02.2018 EP 18290015
(43) Veröffentlichungstag der Anmeldung: 06.01.2021
(73) Patentinhaber: BSH Hausgeräte GmbH, 81739 München (DE)
(72) Erfinder: FLESCH, Sebastien, 67150 Gerstheim (FR); JELLIMANN, Jeremy, 67800 Bischheim (FR); KLEIN, Henri, 68400 Riedisheim (FR)
(86) Internationale Anmeldenummer: PCT/EP2019/053910
(87) Internationale Veröffentlichungsnummer: WO 2019/166249

(56) Entgegenhaltungen:
- EP-A1- 3 473 937
- DE-U1-202013 005 303
- FR-A3- 2 631 534
- JP-A- 2007 003 088
- US-B2- 6 698 419

## Beschreibung

Die vorliegende Erfindung betrifft einen Tischlüfter und ein Verfahren zum Reinigen eines Tischlüfters.

Bei Kochvorgängen auf einem Kochfeld entstehen Dünste und Wrasen. Es sind Dunstabzugsvorrichtungen bekannt, mittels derer Dünste und Wrasen abgesaugt und gereinigt werden können. Insbesondere sind Dunstabzugshauben bekannt, die oberhalb des Kochfeldes montiert werden. Zudem sind Tischlüfter bekannt, bei denen Luft von dem Kochfeld nach unten abgesaugt wird. Die Tischlüfter können auch als Muldenlüfter oder Tischhauben bezeichnet werden und können in dem Kochfeld integriert sein oder zu dem Kochfeld benachbart beispielsweise in eine Arbeitsplatte eingebracht sein.

Beim Betrieb eines Tischlüfters setzen sich an Filterelementen, die zum Ausfiltern von Verunreinigungen in dem Tischlüfter vorgesehen sind, Verunreinigungen ab. Auch an Gehäusen in dem Tischlüfter, durch die die Dünste und Wrasen strömen, setzen sich beim Betrieb des Tischlüfters Verunreinigungen ab. Bei herkömmlichen Tischlüftern müssen die Filterelemente entnommen und gegebenenfalls in einer Spülmaschine gereinigt werden. Unlösbare Teile des Tischlüfters müssen von Hand gereinigt werden.

Ein Nachteil, den solche bekannten Tischlüfter aufweisen, besteht daher darin, dass deren Reinigung aufwändig ist.

Zudem ist es bei Dunstabzugshauben, die oberhalb eines Kochfeldes angeordnet werden, bekannt, eine Sprüheinrichtung für Reinigungswasser in der Dunstabzugshaube vorzusehen, durch die ein Teil der Dunstabzugshaube gereinigt wird. Eine solche Sprüheinrichtung ist beispielsweise in der DE 199 12 913 A1 beschrieben. Hierbei wird in Intervallen mittels einer Sprüheinrichtung der Innenraum der Dunstabzugshaube mit Reinigungswasser besprüht und dieses aus einem Sammelsumpf am Boden des Innenraums der Dunstabzugshaube über eine Leitung abgezogen.

Ein Nachteil dieser Reinigungsvorrichtung besteht darin, dass der Wasserbedarf groß ist und die Reinigung nur in einem Modus erfolgen kann, so dass eine zuverlässige Reinigung nicht sichergestellt ist.

In der JP 2007 003 088 A wird eine Dunstabzugsvorrichtung beschrieben. Hierbei wird eine Ansaugdüse, die einen Einsaugeinlass zum Ansaugen von Kochabluft aufweist, an dem oberen Bereich eines Herdes eines Küchenarbeitsplatzes montiert. Es ist eine Wasser-Sprühdüse zum Reinigen des Fettfilters im unteren Bereich des Küchenarbeitsplatzes vorgesehen. Über die Wasser-Sprühdüse kann Wasser auf die Filterelemente gerichtet werden, die im Inneren der Dunstabzugsvorrichtung in einem Rahmen angeordnet sind. Die Filterelemente können somit gereinigt werden. Die Reinigungsflüssigkeit kann bei dieser Dunstabzugsvorrichtung in einer Wasserwanne am Boden des Küchenarbeitsplatzes aufgefangen werden und mittels einer elektromagnetischen Pumpe wieder zu den Düsen geleitet werden.

In der US 2002 056 446 B2 wird eine Art von Lüftungssystem mit unabhängigen und modularen Komponenten beschrieben, einschließlich eines Rauchabzugsteils, einer Verbindungskomponente, einer Trocknungskomponente und eines Wassertanks, der in einer Küche installiert werden kann, um einen Rauchabzug zu bilden. Das System kann je nach Platzbedarf und Anordnung der vorhandenen Küche flexibel installiert werden, so dass die Erstausrüstung nicht abgebaut und eine ganze Reihe von Rauchabzügen gekauft werden muss. Bei diesem Lüftungssystem ist vorgesehen, dass Sprinklerköpfe Wasser in Form eines Wasservorhangs ausgeben und so die Luft, die eingesaugt wird, reinigen.

In der DE 20 2013 005303 U1 ist ein Kochfeld mit einer zentralen Aussparung für eine Vorrichtung zum Abzug von Kochdünsten nach unten beschrieben. Wie sich aus der Beschreibung und den Figuren ergibt, kann die Aussparung durch ein Verschließelement verschlossen werden. Bei diesen Ausführungsformen ist das Verschließelement beweglich und kann in der Ausführungsform nach Figur 6 mit dem fest eingebrachten Filtereinsatz einrasten. In der Ausführungsform nach Figur 7 kann das Verschließelement über eine Spindel bewegt werden. Auch bei dieser Ausführungsform ist der Filtereinsatze nicht beweglich angeordnet.

Die nachveröffentlichte EP 3 473 937 A1 offenbart eine Dunstfiltereinrichtung für Kochfelder, insbesondere zum Absaugen und Filtern von Kochdünsten unterhalb der Kochfeldebene eines Küchenmöbels. Es soll eine effiziente Entfernung von Kochdünsten und eine einfache Reinigung von Fettfiltern ermöglicht werden. Hierzu umfasst die Dunstfiltereinrichtung mindestens eine verschließbare Einlassöffnung für Kochdunst in der Kochfeldebene, die einem Kochfeld räumlich nah zugeordnet ist und die mit einer Luftfördereinheit kommuniziert. Die Einlassöffnung mündet in einen Reinigungsbehälter, in dem eine, vom Kochdunst durchströmbare Fettabscheideeinheit angeordnet ist. Der Reinigungsbehälter weist eine Auslassöffnung für entfettete Luft und in einem Bodenbereich einen Auslass für abgeschiedenes Fett und eine Reinigungsflüssigkeit auf.

Der Erfindung liegt daher die Aufgabe zugrunde ein Lösung zu schaffen, mittels derer ein Tischlüfter auf einfache Weise zuverlässig gereinigt werden kann.

Gemäß einem ersten Aspekt wird die Aufgabe gelöst durch einen Tischlüfter mit einem Gebläse und einer Ansaugöffnung, über die Luft nach unten eingesaugt wird, und einem Filterraum mit mindestens einem Filterelement. Der Tischlüfter ist dadurch gekennzeichnet, dass der Tischlüfter eine Reinigungsvorrichtung umfasst, die ein Zirkulationssystem zum Führen von Reinigungsflüssigkeit in einem Reinigungskreislauf aufweist und zumindest ein Teil des Filterelementes in dem Reinigungskreislauf liegt und der Filterraum aus zwei Gehäuseteilen besteht und die Ansaugöffnung, in der das Filterelement angeordnet ist, in einem Gehäuseteil gebildet ist, das zumindest bereichsweise nach oben ausfahrbar ist.

Der Tischlüfter weist erfindungsgemäß ein Gebläse und einer Ansaugöffnung auf, über die Luft nach unten eingesaugt wird. Die Ansaugöffnung kann in der Horizontalen oder zu dieser geneigt, beispielsweise in der Vertikalen, liegen. Zudem weist der Tischlüfter einen Filterraum mit mindestens einem Filterelement auf. Als Filterraum wird hierbei ein Gehäuse bezeichnet, an dem die Ansaugöffnung vorgesehen ist. Das Filterelement kann hierbei in der Ansaugöffnung liegen oder in Strömungsrichtung nach der Ansaugöffnung in dem Filterraum angeordnet sein.

Der Tischlüfter umfasst eine Reinigungsvorrichtung, die ein Zirkulationssystem zum Führen von Reinigungsflüssigkeit in einem Reinigungskreislauf aufweist und zumindest ein Teil des mindestens einen Filterelementes in dem Reinigungskreislauf liegt. Das Zirkulationssystem kann aus unterschiedlichen Komponenten bestehen. Insbesondere kann das Zirkulationssystem als Komponenten Leitungen, Schläuche und/und Behälter aufweisen. Zudem können in dem Zirkulationssystem Pumpen und Ventile vorgesehen sein. Die Reinigungsvorrichtung kann zusätzlich zu dem Zirkulationssystem Abdeckungen oder Klappen aufweisen, durch die das Zirkulationssystem bei der Reinigung abgeschlossen wird. Die Reinigungsflüssigkeit kann beispielsweise Wasser darstellen. Das Zirkulationssystem dient zum Führen des Reinigungsmittels in einem Reinigungskreislauf. Als Reinigungskreislauf wird der Verlauf der Reinigungsflüssigkeit bezeichnet, bei dem diese zumindest einmalig durch die Komponenten des Zirkulationssystems hindurchläuft. Insbesondere wird die Reinigungsflüssigkeit wieder zu einer Komponente des Zirkulationssystems geführt, von der die Reinigungsflüssigkeit ursprünglich in den Reinigungskreislauf eingeleitet wurde. Erfindungsgemäß liegt zumindest ein Teil des mindestens einen Filterelementes in dem Reinigungskreislauf. Dies bedeutet, dass bei jedem Zyklus die Reinigungsflüssigkeit zumindest einen Teil des Filterelementes passiert. Zusätzlich passiert die Reinigungsflüssigkeit vorzugsweise zumindest einen Teil der Wände des Filterraumes.

Indem erfindungsgemäß ein Zirkulationssystem vorgesehen ist, über das eine Reinigungsflüssigkeit in einem Reinigungskreislauf geführt werden kann und zumindest ein Teil des mindestens einen Filterelementes in dem Reinigungskreislauf liegt, kann eine Reihe von Vorteilen erzielt werden. Insbesondere können unterschiedliche Reinigungszyklen gefahren werden. So kann die Reinigungsflüssigkeit beispielsweise in einem ersten Reinigungszyklus eine andere Temperatur oder andere Zusammensetzung aufweisen als in einem weiteren Reinigungszyklus. Die Zusammensetzung der Reinigungsflüssigkeit in einem Reinigungszyklus kann beispielsweise ausschließlich aus Wasser bestehen und in einem anderen Reinigungszyklus aus Wasser mit einem Reinigungsmittel bestehen. Durch das Führen der Reinigungsflüssigkeit in einem Reinigungskreislauf ist zudem die Menge von Reinigungsflüssigkeit begrenzt, da dieses mehrfach zum Reinigen zumindest des Teils des Filterelementes verwendet werden kann.

Zudem kann auch in einem Reinigungszyklus beispielsweise die Reinigungsflüssigkeit verdampft werden und zumindest in dem Teil des Reinigungskreislaufs, in dem das Filterelement liegt, als Dampf vorliegen. Durch das Vorsehen eines Zirkulationssystems kann somit zumindest ein Teil des Filterelementes wie in einer Geschirrspülmaschine gereinigt werden und dabei unterschiedlichen Reinigungszyklen unterworfen werden. Während des Reinigungszyklus stellt der Reinigungskreislauf vorzugsweise einen geschlossenen Kreislauf dar.

Gemäß einer Ausführungsform weist das Zirkulationssystem der Reinigungsvorrichtung ein Reservoir für die Reinigungsflüssigkeit, mindestens eine zumindest zeitweise auf das mindestens eine Filterelement gerichtete Düse, zumindest eine Pumpe zum Pumpen der Reinigungsflüssigkeit zu der mindestens einen Düse und mindesten eine Verbindungsleitung zwischen dem Reservoir und der mindestens einen Düse zum Zuleiten von Reinigungsflüssigkeit zu der Düse, auf.

Bei dieser Ausführungsform wird das Zirkulationssystem somit im Wesentlichen durch das Reservoir, die Verbindungsleitung zu den Düsen und den Filterraum, in oder an dem das oder die Filterelemente vorgesehen sind, gebildet.

Das Reservoir ist hierbei vorzugsweise über die mindestens eine Verbindungsleitung mit der mindestens einen Düse zum Zuleiten von Reinigungsflüssigkeit verbunden. Die Verbindungsleitung kann aus einem oder mehreren Rohren und / oder Schläuchen bestehen. In der Reinigungsvorrichtung können eine oder mehrere Düsen vorgesehen sein. Sind mehrere Düsen vorgesehen, so können diese beispielsweise an einem gemeinsamen Rohr vorgesehen sein. Es liegt aber auch im Rahmen der Erfindung jede Düse mit einem eignen Rohr zu versehen, durch das Reinigungsflüssigkeit zu der Düse geleitet wird. Die Düse oder die Düsen sind zumindest zeitweise auf das Filterelement oder die Filterelemente gerichtet. Dies bedeutet, dass die Reinigungsflüssigkeit zumindest in Richtung auf das Filterelement ausgegeben wird. Zusätzlich kann die von der oder den Düsen ausgegebene Reinigungsflüssigkeit aber auch zumindest auf einen Teil der Wände des Filterraumes gerichtet sein. Die Düsen können in dem Tischlüfter fest installiert sein oder in diesem bewegbar, insbesondere verfahrbar oder drehbar, gelagert sein. Gemäß der bevorzugten Ausführungsform umfasst die Reinigungsvorrichtung mindestens eine Pumpe, durch die die Reinigungsflüssigkeit zu der mindestens einen Düse gepumpt wird.

Die Pumpe kann in dem Reservoir oder in der Verbindungsleitung angeordnet sein. Durch die Pumpe wird die Reinigungsflüssigkeit in dem Reinigungskreislauf bewegt.

Diese Ausführungsform der Reinigungsvorrichtung, bei der das Zirkulationssystem ein Reservoir, mindestens eine Düse, zumindest eine Pumpe und mindesten eine Verbindungsleitung zwischen dem Reservoir und der mindestens einen Düse aufweist, weist den Vorteil auf, dass durch die Düsen das mindestens eine Filterelement gereinigt werden kann und die dazu verwendete Reinigungsflüssigkeit auf einfache Weise wieder in den Reinigungskreislauf zurückgeführt werden kann. Die Position des Filterelementes muss bei dieser Ausführungsform für die Reinigung nicht aus derjenigen Position bewegt werden, in der sich diese in einem Betriebszustand des Tischlüfters oder einem Ruhezustand des Tischlüfters befindet. Insbesondere muss der Benutzer das Filterelement nicht aus dem Tischlüfter entnehmen, um dies zu reinigen. Vielmehr kann das Filterelement automatisch gereinigt werden.

Das Reservoir für die Reinigungsflüssigkeit kann einen Teil des Filterraumes darstellen oder ein zu dem Filterraum separater Behälter sein. Vorzugsweise ist das Reservoir so positioniert, dass dieses zumindest bereichsweise unterhalb des Filterelementes zum Auffangen von Reinigungsflüssigkeit von dem Filterelement liegt. Hierdurch kann die Reinigungsflüssigkeit durch die Schwerkraft von dem Filterelement zu dem Reservoir gelangen. Im einfachsten Fall kann die Reinigungsflüssigkeit von dem Filterelement in das Reservoir tropfen. Es liegt aber auch im Rahmen der Erfindung, dass die Flüssigkeit von dem Filterelement über eine Leitung zwischen dem Filterraum und dem Reservoir geleitet wird. Auch in diesem Fall kann bei einem Reservoir, das unterhalb des Filterelementes liegt, das heißt das tiefer liegt, als das Filterelement, die Schwerkraft genutzt werden, um die Reinigungsflüssigkeit zu dem Reservoir zu leiten.

In der Ausführungsform, in der das Reservoir einen Teil des Filterraumes bildet, stellt dieses vorzugsweise den unteren Bereich des Filterraumes dar. Besonders bevorzugt weist der Filterraum bei dieser Ausführungsform im unteren Bereich eine Form auf, die ein vollständiges Abfließen von Reinigungsflüssigkeit aus dem Reservoir erlaubt. Insbesondere soll dadurch das Entleeren des Reservoirs am Ende des Reinigungsvorgangs aber auch das vollständige Rückführen der Reinigungsflüssigkeit aus dem Reservoir zu der oder den Düsen ermöglicht werden. Insbesondere kann der Boden des Filterraumes hierzu zumindest bereichsweise geneigt sein. Die Verbindungsleitung ist dabei vorzugsweise im unteren Bereich des Reservoirs und insbesondere am Boden des Reservoirs angeordnet.

Die Reinigungsflüssigkeit kann in dem Reinigungskreislauf bei Raumtemperatur beziehungsweise bei der Temperatur, die diese in einer Zufuhrleitung aufweist, eingesetzt werden. Allerdings ist es erfindungsgemäß auch möglich die Reinigungsflüssigkeit in dem Reinigungskreislauf zumindest zeitweise zu erwärmen.

Vorzugsweise ist hierzu zumindest ein Heizelement in der Reinigungsvorrichtung vorgesehen. Besonders bevorzugt ist das Heizelement in dem Zirkulationssystem vorgesehen. Das oder die Heizelemente können hierbei in dem Reservoir oder in der Verbindungsleitung vorgesehen sein. Hierdurch wird es möglich die Reinigungsflüssigkeit beispielsweise während eines oder mehrere Reinigungszyklen zu erwärmen und dadurch deren Reinigungswirkung zu steigern. Das Vorsehen mindestens eines Heizelementes ist bei dem erfindungsgemäßen Tischlüfter besonders vorteilhaft, da die erforderliche Heizleistung aufgrund der Führung der Reinigungsflüssigkeit in einem Reinigungskreislauf minimiert ist.

Ist das Heizelement in dem Reservoir angeordnet, so kann dieses beispielsweise am Boden des Reservoirs vorgesehen sein.

Zusätzlich zu einem Heizelement oder alternativ kann in dem Zirkulationssystem ein Verdampfer vorgesehen sein, in dem die Reinigungsflüssigkeit verdampft wird. Der Verdampfer wird so angeordnet, dass die verdampfte Reinigungsflüssigkeit durch die Düsen als Dampf zumindest auf das Filterelement abgegeben wird. Bei dieser Ausführungsform kondensiert der Dampf an dem Filterelement und gelangt somit im flüssigen Zustand wieder als Reinigungsflüssigkeit in das Reservoir.

Gemäß einer bevorzugten Ausführungsform weist die Reinigungsvorrichtung mindestens einen Zufuhranschluss zur Zuleitung von Reinigungsflüssigkeit in den Reinigungskreislauf und mindestens einen Ableitungsanschluss zum Ableiten von Reinigungsflüssigkeit aus dem Reinigungskreislauf auf. Der Zufuhranschluss kann eine Öffnung in dem Filterraum darstellen, an den eine Zufuhrleitung angeschlossen werden kann. Alternativ kann der Zufuhranschluss an der Verbindungsleitung des Zirkulationssystems vorgesehen sein und beispielsweise eine Abzweigung darstellen, an die eine Zufuhrleitung angeschlossen werden kann. Die Zufuhrleitung kann beispielsweise eine Wasserleitung eines Hauses sein, die in der Regel in Küchen verlegt ist. Hierdurch wird es möglich, während des Reinigungsvorgangs, beispielsweise zwischen Reinigungszyklen oder während eines Reinigungszyklus Reinigungsflüssigkeit, beispielsweise Frischwasser in den Reinigungskreislauf zu geben.

Besonders bevorzugt ist der Zufuhranschluss an dem Filterraum angeordnet und ist so positioniert, dass liegt dieser zu dem Reservoir beabstandet ist. Wird das Reservoir durch den unteren Bereich des Filterraumes gebildet, so liegt der Zufuhranschluss in einem Abstand zu dem maximalen Füllstand von Reinigungsflüssigkeit in dem Reservoir. Hierdurch kann ein ungewolltes Eintreten von Reinigungsflüssigkeit in die Zufuhrleitung verhindert werden.

Vorzugsweise weist die Reinigungsvorrichtung mindestens einen Ableitungsanschluss zum Ableiten von Reinigungsflüssigkeit aus dem Reinigungskreislauf auf. Der Ableitungsanschluss kann an dem Reservoir oder in der Verbindungsleitung vorgesehen sein. An den Ableitungsanschluss kann eine Ableitung, die beispielsweise zu einer Abwasserleitung des Hauses führt, die in der Regel in Küchen verlegt ist, angeschlossen werden. Über die Abwasserleitung kann die Reinigungsflüssigkeit aus dem Reinigungskreislauf teilweise oder vollständig entfernt werden. Insbesondere kann zwischen Reinigungszyklen oder nach dem gesamten Reinigungsvorgang die Reinigungsflüssigkeit über die Abwasserleitung ausgelassen werden.

Durch den Zufuhranschluss und den Ableitungsanschluss können die Reinigungsvorrichtung und insbesondere das Zirkulationssystem auf einfache Weise an das Wassersystem einer Küche angeschlossen werden.

Die Ansaugöffnung des Tischlüfters kann den oberen Rand eines kastenförmigen Filterraumes darstellen. Alternativ kann die Ansaugöffnung auch an einer Seite eines Teils des Filterraumes liegen.

Erfindungsgemäß besteht der Filterraum aus zwei Gehäuseteilen und die Ansaugöffnung ist in einem Gehäuseteil gebildet, das zumindest bereichsweise nach oben ausfahrbar ist. Es handelt sich somit um einen ausfahrbaren Tischlüfter. Die Ansaugöffnung kann hierbei beispielsweise in einer Seitenwand des Gehäuseteils, das ausfahrbar ist, vorgesehen sein. Das weitere Gehäuseteil ist vorzugsweise fest in dem Tischlüfter gehalten. Das Ausfahren des Gehäuseteils, an dem die Ansaugöffnung vorgesehen ist, kann über eine Ausfahrvorrichtung erfolgen, die beispielsweise an oder in dem feststehenden Gehäuseteil gelagert sein kann. Die Ausfahrvorrichtung kann beispielsweise eine Spindel darstellen. Die Ansaugöffnung ist vorzugsweise so an dem Filterraum und insbesondere dem beweglichen Gehäuseteil vorgesehen, dass diese nur im ausgefahrenen oder teilweise ausgefahrenen Zustand des Gehäuseteils durchströmt werden kann. In der ausgefahrenen Position, die auch als Betriebsposition bezeichnet werden kann, liegt die Ansaugöffnung oberhalb des feststehenden Gehäuseteils. In der Ansaugöffnung ist das Filterelement angeordnet. In der eingefahrenen Position des beweglichen Gehäuseteils ist dieses vorzugsweise in dem feststehenden Gehäuseteil aufgenommen. Damit liegen auch die Ansaugöffnung und das vorzugsweise an der Ansaugöffnung angeordnete Filterelement im eingefahrenen Zustand im Inneren des feststehenden Gehäuseteils. Somit kann das Filterelement dort gereinigt werden.

Die Erfindung, bei der das Gehäuseteil, an dem die Ansaugöffnung vorgesehen ist, ausfahrbar ist, weist eine Reihe von Vorteilen auf. Zum einen kann die oder können die Düsen in dem feststehenden Gehäuseteil angeordnet sein und nur im eingefahrenen Zustand des beweglichen Gehäuseteils in Strömungsrichtung vor dem Filterelement liegen. In dem ausgefahrenen Zustand, das heißt in dem Betriebszustand, hingegen können die Düsen damit in Strömungsrichtung hinter dem Filterelement liegen und so vor Verunreinigungen geschützt werden. Zudem kann durch das bewegliche Gehäuseteil ein Verschließen des Filterraumes in der eingefahrenen Position automatisch erfolgen. Beispielsweise kann eine Wand des nach unten offenen beweglichen Gehäuseteils den Einlass eines Absaugrohres, das von dem Filterraum abgeht, verdecken. Zusätzlich kann durch die Oberseite des beweglichen Gehäuseteils im eingefahrenen Zustand das untere Gehäuseteil des Filterraumes und damit der gesamte Filterraum nach oben verschlossen werden. Schließlich kann bei der Erfindung mit zwei Gehäuseteilen auch eine Zwischenposition des beweglichen Gehäuseteils eingestellt werden, in dem dieses nur teilweise nach oben ausgefahren wird. Hierdurch kann durch Betrieb des Gebläses und ein gewisser Luftstrom in dem Filterraum ermöglicht werden, durch den das Filterelement nach einer Reinigung getrocknet werden kann. Zudem kann mit dem ausfahrbaren Tischlüfter beim Betrieb Luft von einer größeren Höhe oberhalb des Kochfeldes abgesaugt werden, beispielsweise von Töpfen.

Gemäß einer Ausführungsform weist der Tischlüfter eine Abdeckung auf, die den Filterraum zumindest zeitweise nach oben abschließt. Bei der Erfindung, bei dem der Filterraum aus zwei Gehäuseteilen besteht, kann die Abdeckung an der Oberseite des ausfahrbaren Gehäuseteils vorgesehen sein. Bei einem Tischlüfter, bei dem der Filterraum feststehend ist, kann die Abdeckung als Klappe verschwenkbar an der Oberseite des Filterraumes vorgesehen sein oder von dem Filterraum abnehmbar ausgestaltet sein.

Durch das zeitweise Verschließen des Filterraumes nach oben kann der Reinigungskreislauf abgeschlossen sein. Hierdurch wird bei dem Reinigungsvorgang das Austreten von Reinigungsflüssigkeit verhindert. Zudem ist es bei einer Abdeckung, die den Filterraum abdichtet, beispielsweise durch eine Dichtlippe möglich die Reinigungsflüssigkeit in einem Teil des Reinigungskreislaufes zu verdampfen. Insbesondere kann die Reinigungsflüssigkeit vor der oder den Düsen verdampft werden und der Filterraum und insbesondere das oder die Filterelemente können dadurch mit Dampf gereinigt werden.

Zusätzlich weist der Tischlüfter vorzugsweise eine Klappe auf, die den Filterraum gegenüber einem Absaugrohr abschließt. An dem Filterraum ist ein Absaugrohr vorgesehen, das mit dem Gebläse des Tischlüfters verbunden ist. Für die Reinigung des Tischlüfters muss dieses Absaugrohr verschlossen werden, um das Eintreten von Reinigungsflüssigkeit in das Absaugrohr und damit das Gebläse zu verhindern. Das Verschließen des Absaugrohres kann durch eine Klappe, die an dem Einlass des Absaugrohres verschwenkbar oder verschiebbar gelagert ist, realisiert werden. Bei der Ausführungsform, bei der der Filterraum aus zwei Gehäuseteilen besteht, kann diese Klappe durch eine Wand des beweglichen Gehäuseteils ersetzt werden.

Gemäß einer bevorzugten Ausführungsform weist der Tischlüfter zumindest eine Steuereinheit zum automatischen Reinigen des mindestens einen Filterelementes durch die Reinigungsvorrichtung auf. Die Steuereinrichtung dient insbesondere zum Zugeben einer Reinigungsflüssigkeit in den Reinigungskreislauf sowie das Bewegen der Reinigungsflüssigkeit in dem Reinigungskreislauf. Durch die Steuereinheit können insbesondere die Pumpe, sowie gegebenenfalls vorgesehen Ventile zur Zuleitung und Ableitung der Reinigungsflüssigkeit und - sofern vorgesehen - ein Heizelement und/oder Verdampfer angesteuert werden. Zusätzlich kann durch die Steuerung ein automatisches Verschließen des Filterraums vor dem Beginn der Reinigung erfolgen. Beispielsweise kann das bewegliche Gehäuseteil hierbei eingefahren werden oder eine Abdeckung an der Oberseite und eine Klappe an dem Absaugrohr können verfahren werden, um den Filterraum zu verschließen.

Gemäß einem weiteren Aspekt betrifft die Erfindung ein Verfahren zur Reinigung eines erfindungsgemäßen Tischlüfters. Das Verfahren ist dadurch gekennzeichnet, dass dieses die Schritte
- des Pumpens der Reinigungsflüssigkeit zu mindestens einer Düse und Besprühen des mindestens einen Filterelementes mit Reinigungsflüssigkeit,
- dem Auffangen von Reinigungsflüssigkeit von dem Filterelement, und
- weiteres Pumpen der Reinigungsflüssigkeit zu der mindestens einen Düse umfasst.

Vorteile und Merkmale, die bezüglich des erfindungsgemäßen Tischlüfters beschrieben werden, gelten - soweit anwendbar - auch für das erfindungsgemäße Verfahren und umgekehrt.

Vorzugsweise wird in einem ersten Schritt wird Reinigungsflüssigkeit in den Reinigungskreislauf zugeleitet. Dies kann beispielsweise über eine Zufuhrleitung erfolgen, die mit der Wasserleitung der Küche verbunden ist. Es wird vorzugsweise so viel Wasser zugeführt, bis das Reservoir vollständig gefüllt oder bis zu einem gewünschten Füllstand gefüllt ist. In einem nächsten Schritt wird die Reinigungsflüssigkeit aus dem Reservoir zu den Düsen, die in oder an dem Filterraum vorgesehen sind, gepumpt. Dies erfolgt vorzugsweise über die Verbindungsleitung, so dass die Reinigungsflüssigkeit zu den Düsen gepumpt wird. Über die Düsen wird die Reinigungsflüssigkeit in den Filterraum und vorzugsweise auf das oder die Filterelemente gesprüht. Von den Wänden des Filterraumes oder von dem oder den Filterelementen wird die Reinigungsflüssigkeit wieder in dem Reservoir aufgefangen. Die Schritte des Pumpens und Auffangens werden dann wiederholt.

Hierdurch wird der Filterraum mehrfach von der Reinigungsflüssigkeit durchlaufen und der Filterraum und insbesondere die darin oder daran vorgesehenen Filterelemente können zuverlässig gereinigt werden.

Gemäß einer Ausführungsform des Verfahrens umfasst das Verfahren den Schritt des Abführens der Reinigungsflüssigkeit aus dem Reinigungskreislauf nach mindestens einem Durchgang der Schritte des Pumpens und Auffangens gefolgt von einem Schritt des Zuleitens weiterer Reinigungsflüssigkeit in den Reinigungskreislauf und von mindestens einem weiteren Durchgang des Pumpens und Auffangens.

Bei dieser Ausführungsform kann zwischen Reinigungszyklen die Reinigungsflüssigkeit abgeführt werden und durch frische Reinigungsflüssigkeit ersetzt werden und so ein zuverlässiges Reinigen des Tischlüfters gewährleistet werden. Am Ende des Reinigungsvorgangs wird die Reinigungsflüssigkeit vollständig aus dem Reinigungskreislauf entfernt das Zirkulationssystem vorzugsweise geleert.

Gemäß einer bevorzugten Ausführungsform umfasst das Verfahren den Schritt der Zugabe eines Reinigungsmittels in den Reinigungskreislauf. Das Reinigungsmittel wird vorzugsweise zu der Reinigungsflüssigkeit in dem Reservoir zu gegeben. Das Reinigungsmittel kann ein flüssiges oder festes Reinigungsmittel sein. Vorzugsweise kann das Reinigungsmittel aus mehreren Komponenten bestehen, die sich durch ihre Eigenschaften unterscheiden. Dieses Reinigungsmittel wird als Mehrkomponenten-Reinigungsmittel bezeichnet. Insbesondere kann eine Komponente sich schneller in der Reinigungsflüssigkeit auflösen als eine weitere Komponente. Alternativ oder zusätzlich kann eine Komponente sich beispielsweise nur bei erhöhten Temperaturen auflösen oder aktiv werden, während eine weitere Komponente sich bereits bei niedrigeren Temperaturen auflöst oder aktiv wird.

Indem ein Reinigungsmittel zugegeben wird, wird der Reinigungseffekt weiter verbessert. Da bei dem erfindungsgemäßen Verfahren die Reinigungsflüssigkeit in einem Reinigungskreislauf geführt wird, ist der Bedarf an Reinigungsmittel minimiert. Zudem kann ein Mehrkomponenten-Reinigungsmittel eingesetzt werden, da unterschiedliche Bedingungen in dem Reinigungskreislauf eingestellt werden können.

Gemäß einer Ausführungsform umfasst das Verfahren den Schritt des Erwärmens der Reinigungsflüssigkeit. Hierdurch kann zum einen eine verbesserte Reinigung gewährleistet werden. Zudem kann beispielsweise ein Reinigungsmittel mit unterschiedlichen Komponenten, die sich bei unterschiedlichen Temperaturen auflösen oder bei unterschiedlichen Temperaturen aktiv werden, verwendet werden.

Gemäß einer bevorzugten Ausführungsform umfasst das Verfahren den Schritt des Trocknens des Zirkulationssystems, in dem zumindest der Filterraum und insbesondere zumindest das Filterelement getrocknet werden. Der Schritt des Trocknens kann hierbei zunächst das Ablassen oder Ableiten der Reinigungsflüssigkeit aus dem Reinigungskreislauf umfassen. Anschließend kann beispielsweise die Lüftungsvorrichtung des Tischlüfters betrieben werden, wodurch Luft durch das mindestens eine Filterelement geleitet wird und dieses getrocknet wird.

Gemäß einer bevorzugten Ausführungsform wird das Verfahren entsprechend einem in einer Steuereinheit gespeicherten Programm automatisch ausgeführt.

Hierbei können unterschiedliche Programme gespeichert sein, die von dem Benutzer des Tischlüfters einzeln oder gemeinsam ausgewählt werden können. So kann beispielsweise ein Schnellreinigungsprogramm hinterlegt sein. Bei diesem Programm kann die Reinigungsvorrichtung beispielsweise mit Wasser als Reinigungsflüssigkeit betrieben werden und das Wasser kann in der Reinigungsvorrichtung erwärmt werden oder es kann Warmwasser in den Reinigungskreislauf eingegeben werden.

Ein weiteres Programm ist eine Dampfbehandlung. Diese kann beispielsweise gewählt werden, um ein anschließendes manuelles Reinigen zu erleichtern. Hierbei wird Reinigungsflüssigkeit in den Reinigungskreislauf zugeleitet und dort verdampft.

Weiterhin kann Programm für normales oder intensives Reinigen programmiert sein. Hierbei kann als Reinigungsflüssigkeit Wasser verwendet werden, das in dem Reinigungskreislauf in zumindest einem Reinigungszyklus erwärmt wird. Zudem kann bei diesem Programm Reinigungsmittel zugegeben werden. Die Zugabe kann manuell erfolgen.

Ein weiteres Programm kann das Trocknen sein. Hierbei kann zunächst die Reinigungsflüssigkeit aus dem Reinigungskreislauf entfernt werden und anschließend die Lüftungsvorrichtung betrieben werden, um das Filterelement durch den Luftzug zu trocknen.

Zudem kann ein Programm des Entkalkens vorgesehen sein. Bei diesem Programm kann ein spezielles Reinigungsmittel zugegeben werden.

Die vorliegende Erfindung wird im Folgenden erneut unter Bezugnahme auf die beiliegenden Figuren genauer erläutert. Es zeigen:
Figur 1: eine schematische Prinzipdarstellung einer nicht erfindungsgemäßen Ausführungsform eines Tischlüfters;
Figur 2: eine schematische Prinzipdarstellung der Funktionsweise der Lüftungsvorrichtung des Tischlüfters nach Figur 1;
Figur 3: eine schematische Prinzipdarstellung einer Ausführungsform des erfindungsgemäßen Tischlüfters;
Figur 4: eine schematische Prinzipdarstellung der Ausführungsform des erfindungsgemäßen Tischlüfters in einem Trockenschritt; und
Figur 5: eine schematische Prinzipdarstellung der Funktionsweise der Lüftungsvorrichtung der Ausführungsform des Tischlüfters;

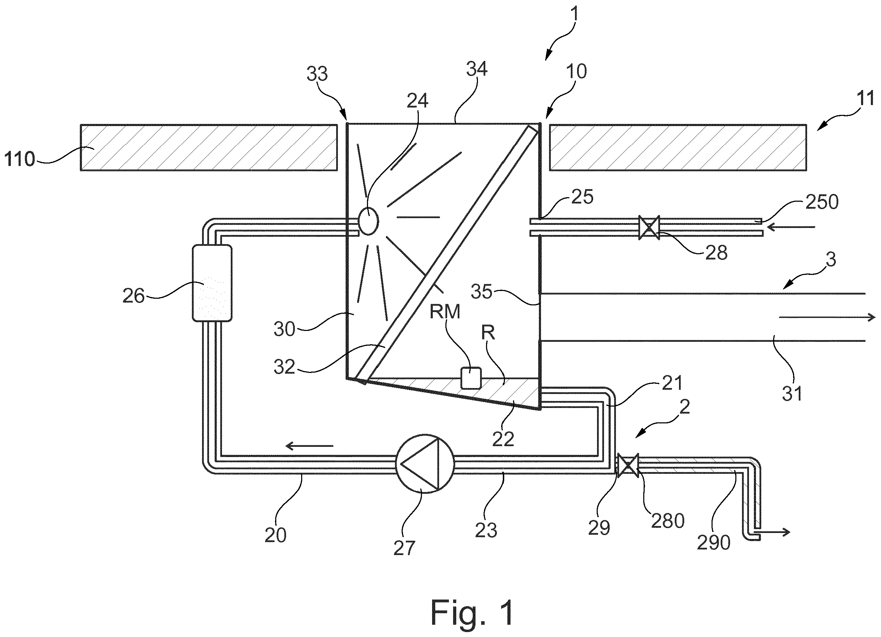

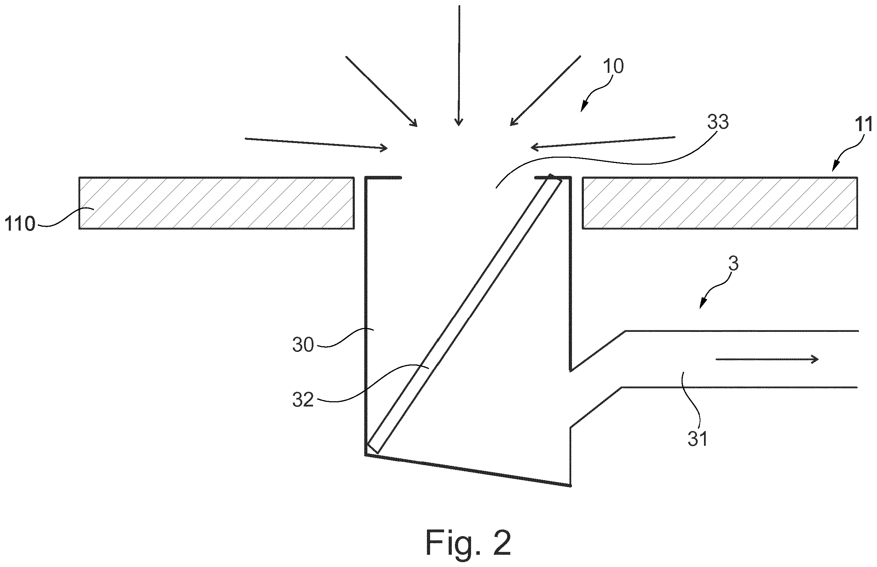

In Figur 1 ist eine schematische Prinzipdarstellung einer Ausführungsform eines Tischlüfters 10 gezeigt. Der Tischlüfter 10 ist in der dargestellten Ausführungsform Teil eines Kombinationsgerätes 1, das zusätzlich ein Kochfeld 11 umfasst, von dem in Figur 1 nur zwei Kochzonen 110 gezeigt sind. Der Tischlüfter 10 ist in das Kochfeld 11 integriert. Der Tischlüfter 10 umfasst eine Lüftungsvorrichtung 3 und eine Reinigungsvorrichtung 2. Die Lüftungsvorrichtung 3 und deren Funktion werden unter Bezugnahme auf die Figur 2 genauer beschrieben, in der der Tischlüfter 10 zur besseren Erkennbarkeit ohne Reinigungsvorrichtung gezeigt ist. Die Lüftungsvorrichtung 3 weist einen Filterraum 30 auf, der auch als Gehäuse bezeichnet werden kann. Der Filterraum 30 ist zwischen den Kochzonen 110 des Kochfeldes 11 angeordnet. Der Filterraum 30 ist in der dargestellten Ausführungsform ein nach offenes kastenförmiges Gehäuse. Die Öffnung des Filterraumes 30 an dessen Oberseite stellt die Ansaugöffnung 33 der Lüftungsvorrichtung 3 dar. In dem Filterraum 30 ist mindestens ein Filterelement 32 angeordnet. In der Ausführungsform nach Figur 2 ist nur ein Filterelement 32 gezeigt. Das Filterelement 32 liegt schräg in dem Filterraum 30. An dem Filterraum 30 schließt sich an einer Seitenwand ein Absaugrohr 31 an, das mit einem Gebläse (nicht gezeigt) verbunden ist. Das Filterelement 32 ist so angeordnet, dass dieses den Einlass des Absaugrohres 31 in senkrechter Projektion auf den Einlass vollständig abdeckt.

Bei Betrieb der Lüftungsvorrichtung 3 wird durch das Gebläse (nicht gezeigt) ein Unterdruck erzeugt. Aufgrund dieses Unterdrucks wird Luft durch das Absaugrohr 31 eingesaugt. Da das Absaugrohr 31 mit dem Filterraum 30 verbunden ist, wird hierdurch Luft über die Ansaugöffnung 33 in den Filterraum 30 eingesaugt. Die in den Filterraum 30 eintretende Luft, die in der Regel durch Wasser oder Fettpartikel verunreinigt ist und auch als Wrasen bezeichnet wird, ist in der Figur 2 schematisch durch Pfeile gezeigt. Da das Filterelement 32 eine solche Größe und Ausrichtung aufweist, dass dieses den Einlass des Absaugrohres 31 abdeckt, muss die durch die Ansaugöffnung 33 eintretende Luft durch das Filterelement 32 hindurchtreten, bevor sie zu dem Einlass des Absaugrohres 31 gelangt und über dieses abgesaugt wird. Hierbei wird die Luft an dem Filterelement 32 von Verunreinigungen befreit, die sich an dem Filterelement 32 anlagern.

Der Tischlüfter 2 weist außer der beschriebenen und in Figur 2 gezeigten Lüftungsvorrichtung 3 auch eine Reinigungsvorrichtung 2 auf. Zudem ist zusätzlich an der Lüftungsvorrichtung 3 zusätzlich eine Abdeckung 34 vorgesehen. Die Abdeckung 34 deckt zeitweise die Ansaugöffnung 34 ab, das heißt verschließt den Filterraum 30 nach oben. Eine Klappe 35 ist am Einlass des Absaugrohres 31 angeordnet und verschließt diese zeitweise.

Die Reinigungsvorrichtung 2 umfasst ein Zirkulationssystem 20. Das Zirkulationssystem 20 umfasst in der dargestellten Ausführungsform als Komponenten, in denen eine Reinigungsflüssigkeit in einem Reinigungskreislauf 21 geführt ist, den Filterraum 30, ein Reservoir 22, eine Verbindungsleitung 23 und eine Düse 24. Zudem umfasst das Zirkulationssystem 20 eine Pumpe 27 sowie ein Heizelement 26. In der dargestellten Ausführungsform liegen die Pumpe 27 und das Heizelement 26 in der Verbindungsleitung 23. Zusätzlich zu dem Zirkulationssystem 20 umfasst die Reinigungsvorrichtung 2 eine Zufuhrleitung 250 und eine Ableitung 290. In der Zufuhrleitung 250 und der Ableitung 290 ist jeweils ein Ventil 28, 280 vorgesehen. Es liegt aber auch im Rahmen der Erfindung, dass die Ventile 28, 280 jeweils nicht in der Zufuhrleitung 250 und der Ablassleitung 290 sondern beispielsweise am Ende der Zufuhrleitung 250 oder einer Abzweigung in der Ableitung 290 angeordnet sind. In einer Wand des Filterraumes 30 ist eine Öffnung eingebracht, die als Zufuhranschluss 25 dient und über die die Zufuhrleitung 250 an den Filterraum 30 angeschlossen werden kann. In der dargestellten Ausführungsform ist in der Verbindungsleitung 23 eine Abzweigung vorgesehen, die als Ableitungsanschluss 29 dient, an dem die Ableitung 290 angeschlossen ist.

Der Filterraum 30 weist in der dargestellten Ausführungsform eine Form auf, bei der der Boden des Filterraumes 30 zu einer Seite hin geneigt ist. Die Verbindungsleitung 23 ist so an dem Filterraum 30 angeschlossen, dass diese in dem Bereiche des Filterraumes 30, an dem dieser eine größere Höhe aufweist, das heißt in dem tieferen Bereich des geneigten Bodens, liegt.

Der untere Bereich des Filterraumes 30 bildet das Reservoir 22 des Zirkulationssystems 20. Es liegt allerdings auch im Rahmen der Erfindung, dass das Reservoir ein zu dem Filterraum 30 separates Bauteil ist, das unterhalb des Filterraumes 30 liegt und mit dem Filterraum 30 zur Leitung von Reinigungsflüssigkeit in das Reservoir beispielsweise über eine weitere Leitung (nicht gezeigt) verbunden ist.

In der Prinzipskizze der Figur 1 ist die Verbindungsleitung 23 im unteren Ende der Seitenwand des Filterraumes 30 angeordnet. Die Verbindungsleitung kann allerdings auch an einer anderen Stelle, beispielsweise im Boden des Filterraumes 30 vorgesehen sein.

Die Zufuhrleitung 250 ist im oberen Bereich der Seitenwand des Filterraumes 30 angeordnet, das heißt mündet im oberen Bereich in diesen Filterraum 30. Die Zufuhrleitung 250 kann auch an einer anderen Stelle in den Filterraum 30 münden. Wesentlich ist lediglich, dass die Zufuhrleitung 250 so angeordnet ist, dass diese nicht mit Reinigungsflüssigkeit R, die sich im Reservoir 22 ansammelt, in Kontakt tritt. Hierdurch wird verhindert, dass Reinigungsflüssigkeit R in den Wasserkreislauf des Haushaltes gelangt.

Nach der Benutzung der Lüftungsvorrichtung 3 des Tischlüfters 10 kann dieser mit der erfindungsgemäßen Reinigungsvorrichtung 2 automatisch gereinigt werden.

Hierzu kann das Ventil 28 in der Zufuhrleitung 250 geöffnet werden, wodurch Reinigungsflüssigkeit R, insbesondere Wasser in den Filterraum 30 geleitet wird. Die Menge an Reinigungsflüssigkeit R wird vorzugsweise über eine Steuerung (nicht gezeigt) eingestellt. Die Menge ist dabei so bemessen, dass ausreichend Reinigungsflüssigkeit R in dem Reinigungskreislauf 21 vorliegt, um das Reservoir 22 und die Verbindungsleitung 23 zu füllen.

Über die Pumpe 27 wird Reinigungsflüssigkeit R aus dem Reservoir 22 in die Verbindungsleitung 23 gepumpt. Die Reinigungsflüssigkeit R kann dabei über das Heizelement 26 aufgeheizt und gegebenenfalls auch verdampft werden. Die Reinigungsflüssigkeit R wird dann durch die Düse 24 ausgegeben. Die Düse 24 ist dabei zumindest auf das Filterelement 32 gerichtet. Die Reinigungsflüssigkeit R, die in oder an dem Filterelement 32 herunterläuft oder von diesem abtropft, gelangt wieder in das Reservoir 22. Während dieses Reinigungsvorgangs sind sowohl die Abdeckung 34 als auch die Klappe 35 so positioniert, dass diese die Ansaugöffnung 33 beziehungsweise den Einlass des Absaugrohres 31 verschließen. Dieser Reinigungsvorgang kann so lange ausgeführt werden, bis das Filterelement 32 von den Verunreinigungen befreit ist.

In der Figur 1 ist schematisch in der Reinigungsflüssigkeit R ein Reinigungsmittel RM in Form eines Tabs gezeigt. Dieses kann vor oder während des Reinigungsvorgangs in die Reinigungsflüssigkeit R gegeben werden.

Mit dem Tischlüfter 10 gemäß Figur 1 können auch die oben genannten weiteren Reinigungsprogramme ausgeführt werden.

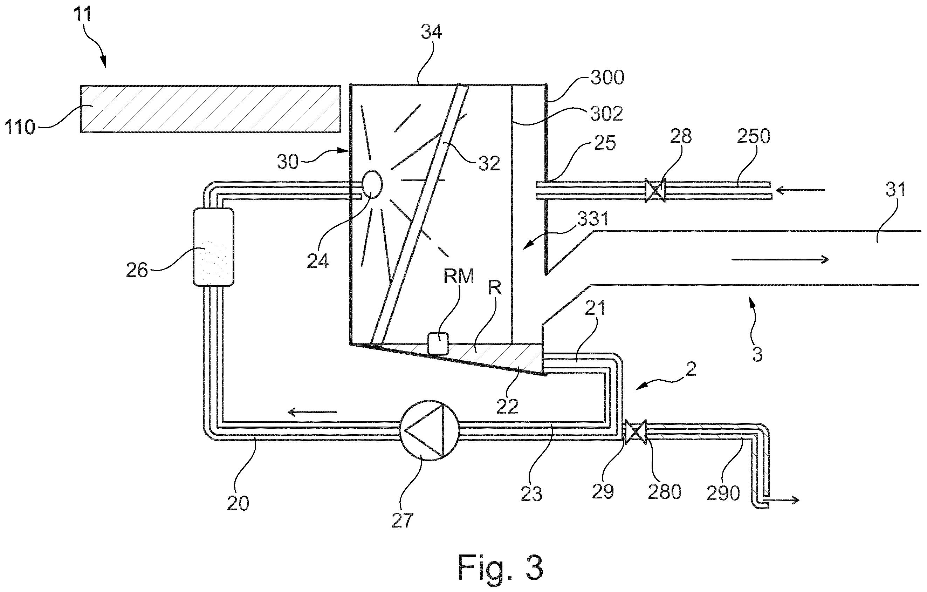

In Figur 3 ist eine Ausführungsform eines erfindungsgemäßen Tischlüfters 10 gezeigt. Bei dieser Ausführungsform handelt es sich um einen sogenannten Down-Draft Tischlüfter. Die Ausführungsform gemäß Figur 3 unterscheidet sich von dem Tischlüfter der Figur 1 zum einen durch die Anordnung des Tischlüfters 10 bezüglich des Kochfeldes 11. Wie in Figur 3 zu erkennen ist, ist der Tischlüfter 10 hinter oder neben dem Kochfeld 11, von dem in Figur 3 nur eine Kochzone 110 gezeigt ist, angeordnet.

Weiterhin unterscheidet sich die als Prinzipskizze dargestellte Ausführungsform nach Figur 3 dadurch von dem Tischlüfter nach Figur 1, dass die Lüftungsvorrichtung 3 einen anderen Aufbau aufweist. Die Lüftungsvorrichtung 3 der zweiten Ausführungsform umfasst einen mehrteiligen Filterraum 30. Insbesondere besteht der Filterraum 30, der auch als Gehäuse bezeichnet werden kann, aus einem feststehenden unteren Gehäuseteil 300 und einem beweglichen oberen Gehäuseteil 301.

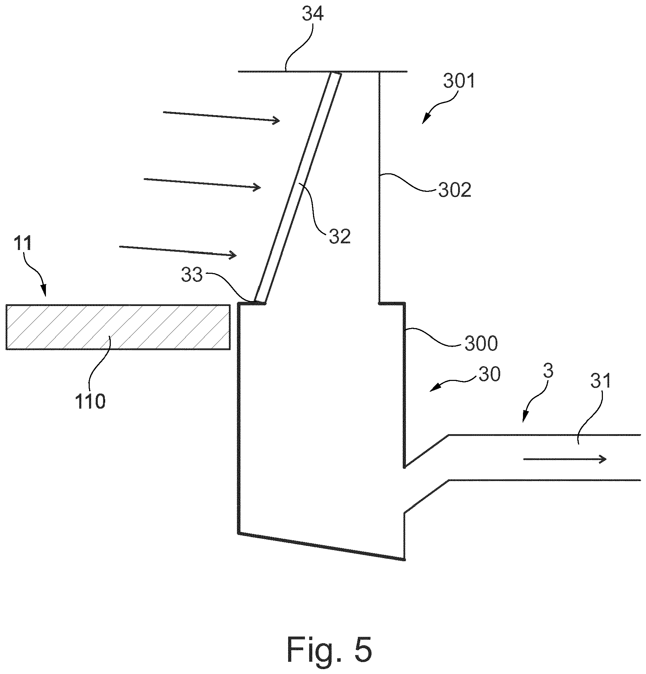

Die Lüftungsvorrichtung 3 und deren Funktion werden unter Bezugnahme auf die Figur 5 genauer beschrieben, in der der Tischlüfter 10 zur besseren Erkennbarkeit ohne Reinigungsvorrichtung 2 gezeigt ist. In der Figur 5 ist das obere Gehäuseteil 301 in der gegenüber dem unteren Gehäuseteil 30 nach oben ausgefahrenen Stellung gezeigt, die auch als Betriebsstellung des Tischlüfters 10 bezeichnet werden kann. Das untere Gehäuseteil 300 entspricht dem Filterraum 30 der ersten Ausführungsform. Das obere Gehäuseteil 301 umfasst die Abdeckung 34, die die Oberseite des oberen Gehäuseteils 34 bildet. Zudem weist das obere Gehäuseteil 301 eine Rückwand 302 auf, die sich von der Abdeckung 34 aus nach unten erstreckt. An dem oberen Gehäuseteil 301 ist das Filterelement 32 befestigt. Insbesondere ist das Filterelement 32 in der gezeigten Ausführungsform so ausgerichtet, dass diese aus der Vertikalen geneigt in dem oberen Gehäuseteil 301 aufgenommen ist. Es liegt allerdings auch im Rahmen der Erfindung, dass das Filterelement 32 vertikal in dem oberen Gehäuseteil 301 gehalten ist. Das obere Gehäuseteil 301 ist nach unten offen. An der Seite des Gehäuseteils 301, die der Rückwand 302 gegenüber liegt und an der das Filterelement 32 angeordnet ist, liegt die Ansaugöffnung 33 der Lüftungsvorrichtung 3. Die anströmenden Wrasen sind in Figur 5 schematisch durch Pfeile angedeutet.

Das untere Gehäuseteil 300 des Filterraumes 30 ist nach oben offen. Durch die Öffnung des unteren Gehäuseteils 300 ist da obere Gehäuseteil 301 in das untere Gehäuseteil 300 eingeführt. In dem unteren Gehäuseteil 300 ist in einer Wand das Absaugrohr 31 angeschlossen, dieses ist im Gegensatz zu der Lüftungsvorrichtung nach Figur 1, von dem Filterraum 30 aus nach oben ansteigend ausgebildet. Es liegt aber auch im Rahmen der Erfindung, dass das Absaugrohr 31 horizontal verläuft. Der Boden des unteren Gehäuseteils 300 ist entsprechend der ersten Ausführungsform geneigt ausgebildet.

Wie sich aus Figur 3 ergibt, bildet auch bei dieser Ausführungsform der untere Bereich des Filterraumes 30 und insbesondere des unteren Gehäuseteils 300 das Reservoir 22 der Reinigungsvorrichtung 2. Der Aufbau der Reinigungsvorrichtung 2 entspricht der ersten Ausführungsform, die in Figur 1 gezeigt ist und wird daher nicht erneut beschrieben.

Nachdem die Lüftungsvorrichtung 3 des Tischlüfters 10 benutzt wurde, kann das obere Gehäuseteil 301, wie in Figur 3 gezeigt in das untere Gehäuseteil 300 eingefahren werden. In dieser Position die auch als Ruhestellung oder Reinigungsstellung bezeichnet werden kann, verschließt die Abdeckung 34 die Öffnung des unteren Gehäuseteils 301 nach oben. Die Rückwand 302 des oberen Gehäuseteils 301 ragt so weit in das untere Gehäuseteil 301, dass dieses das Absaugrohr 31 nach vorne abdeckt. Die Rückwand 302 befindet sich in einem Abstand zu der Wand des unteren Gehäuseteils 300, in der der Zufuhranschluss und der Einlass des Absaugrohres 31 liegen. In der Reinigungsstellung kann Reinigungsflüssigkeit R, beispielsweise Wasser, über die Zufuhrleitung 250 in das untere Gehäuseteil 300 des Filterraumes 30 eingebracht werden. Aufgrund des Abstandes zu der Rückwand 302 kann die Reinigungsflüssigkeit zu dem Boden des Filterraumes 30 gelangen, der als Reservoir 22 dient. Wie sich aus Figur 3 ergibt wird vorzugsweise so viel Reinigungsmittel R in das Reservoir 22 gegeben, bis die Unterkante des oberen Gehäuseteils 301, insbesondere die Unterkante der Rückwand 302 in das Reinigungsmittel ragt. Anschließend kann die Reinigung des Tischlüfters 10, wie oben beschrieben durchgeführt werden. Auch mit der Ausführungsform des Tischlüfters 10 können die oben beschriebenen unterschiedlichen Reinigungsprogramme ausgeführt werden.

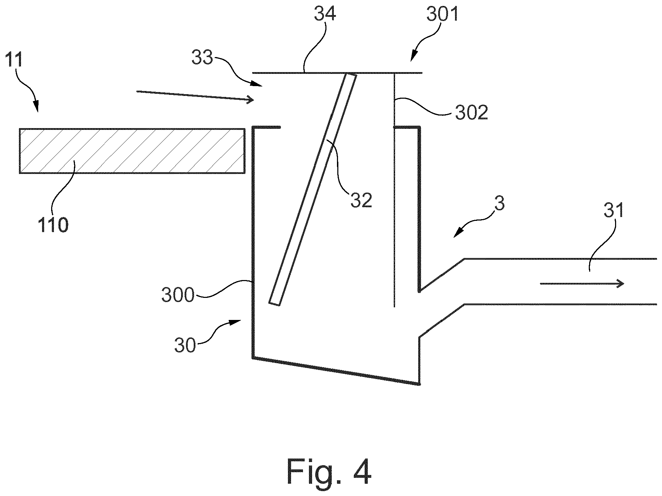

Zum Trocknen des Filterelementes 32 kann nach dem Auslassen der Reinigungsflüssigkeit R das obere Gehäuseteil 301 so weit nach oben ausgefahren werden, dass der Einlass des Abluftrohres 31 nicht mehr durch die Rückwand 302 versperrt ist. In dieser Position, die in Figur 4 gezeigt ist, kann das Gebläse (nicht gezeigt) betrieben werden und durch den Luftstrom das Filterelement 32 getrocknet werden.

Die vorliegende Erfindung ist nicht auf die dargestellten Ausführungsformen beschränkt. Der Schutzumfang wird durch die Ansprüche definiert.

Insbesondere ist zu beachten, dass es sich bei den Figuren um Prinzipskizzen handelt. Die Abmessungen, Formen und relativen Anordnungen der Teile des Zirkulationssystems können daher von den gezeigten abweichen. So kann beispielsweise die Zufuhrleitung an einer Stelle des Filterraumes liegen, die unterhalb des Abluftrohres liegt. Auch kann die Zufuhrleitung an einer anderen Wand des Filterraumes als das Abluftrohr liegen. Auch die Verbindungsleitung kann an einer anderen Wand des Filterraumes angeschlossen sein, beispielsweise am Boden des Filterraumes.

Bei dem erfindungsgemäßen Tischlüfter sind vorzugsweise der Ansaugbereich und/oder das Absaugrohr so gebaut, dass sie geschlossen werden können oder so platziert, dass sie von der Reinigungsflüssigkeit nicht erreicht werden können.

In dem Gehäuse können unterschiedliche Reinigungsmethoden verwendet werden. Beispielsweise:
- Dampf zum Aufweichen der Verunreinigungen
- Wasser aufsprühen durch Düse(n)
- Warmwasser aufsprühen durch Düse(n)
- Warmwasser mit Reinigungsmittel (insbesondere chemischem Reinigungsmittel) und aufsprühen durch Düse(n)

Es können mehrere Reinigungsprogramme eingestellt oder ausgewählt werden. Beispielsweise:
- Schnellreinigung nur mit Warmwasser
- Dampf, um eine manuelle Reinigung zu vereinfachen
- Normale/Intensive Reinigung mit chemischem Reinigungsmittel
- Trocken, beispielsweise durch leichtes Öffnen des Gehäuses und gegebenenfalls zusätzlichem Betreiben der Lüftungsvorrichtung
- Entkalken

Das Zirkulationssystem umfasst vorzugsweise die folgenden Komponenten, durch die die Reinigungsflüssigkeit in einem Reinigungskreislauf geführt wird:
- Filterelement der Lüftungsvorrichtung
- Pumpe
- Heizung
- Düse

Der Tischlüfter, der auch als Gerät bezeichnet werden kann, wird beispielsweise an eine Wasserleitung, insbesondere Frischwasserleitung angeschlossen. Wasserleitungen sind in der Regel in Küchen unterhalb der Arbeitsplatte vorhanden. Das Gerät wird vorzugsweise an einen Ablauf, insbesondere an eine Abwasserleitung, angeschlossen. Das Gerät ist so gebaut, dass in diesem kein Wasser stehen bleibt. Alternativ kann auch ein Tank verwendet werden, in dem die verwendete Reinigungsflüssigkeit nach dem Ablassen aus dem Reinigungskreislauf gesammelt und in Intervallen entsorgt wird.

Der Benutzer des Tischlüfters braucht diese nicht mehr von Hand zu reinigen. Leitungen für Frischwasser und Abwasser sind in der Regel in Küchen vorgesehen, so dass der Tischlüfter auf einfache Weise angeschlossen werden kann. Es können Reinigungsmittel verwendet werden, die beispielsweise auch für eine Spülmaschine eingesetzt werden, beispielsweise feste Reinigungsmittel in Form von Tabs. Da zumindest die Filterelemente auf einfache Weise gereinigt werden können, bringen diese stets die optimale Leistung, da eine Sättigung der Filterelemente verhindert werden kann.

### Bezugszeichen

- 1: Kombinationsgerät
- 10: Tischlüfter
- 11: Kochfeld
- 110: Kochzone

- 2: Reinigungsvorrichtung
- 20: Zirkulationssystem
- 21: Reinigungskreislauf
- 22: Reservoir
- 23: Verbindungsleitung
- 24: Düse
- 25: Zufuhranschluss
- 250: Zufuhrleitung
- 26: Heizelement
- 27: Pumpe
- 28: Ventil (Wasserzufuhr)
- 280: Ventil (Ableitung)
- 29: Ableitungsanschluss
- 290: Ableitung
- R: Reinigungsflüssigkeit
- RM: Reinigungsmittel
- 3: Lüftungsvorrichtung
- 30: Filterraum
- 300: festes Gehäuseteil
- 301: bewegliches Gehäuseteil
- 302: Rückwand
- 31: Absaugrohr
- 32: Filterelement
- 33: Ansaugöffnung
- 34: Abdeckung
- 35: Klappe

## Patentansprüche

1. Tischlüfter mit einem Gebläse und einer Ansaugöffnung (33), über die Luft nach unten eingesaugt wird, und einem Filterraum (30) mit mindestens einem Filterelement (32), wobei der Tischlüfter (10) eine Reinigungsvorrichtung (2) umfasst, die ein Zirkulationssystem (20) zum Führen von Reinigungsflüssigkeit (R) in einem Reinigungskreislauf (21) aufweist und zumindest ein Teil des Filterelementes (32) in dem Reinigungskreislauf (21) liegt, **dadurch gekennzeichnet, dass** der Filterraum (30) aus zwei Gehäuseteilen (300, 301) besteht und die Ansaugöffnung (33), in der das Filterelement angeordnet ist, in einem Gehäuseteil (301) gebildet ist, das zumindest bereichsweise nach oben ausfahrbar ist.

2. Tischlüfter nach Anspruch 1, **dadurch gekennzeichnet, dass** das Zirkulationssystem (20) der Reinigungsvorrichtung (2) ein Reservoir (22) für die Reinigungsflüssigkeit (R),
mindestens eine zumindest zeitweise auf das mindestens eine Filterelement (32) gerichtete Düse (24),
zumindest eine Pumpe (27) zum Pumpen der Reinigungsflüssigkeit (R) zu der mindestens einen Düse (24)
und mindesten eine Verbindungsleitung (23) zwischen dem Reservoir (22) und der mindestens einen Düse (24) zum Zuleiten von Reinigungsflüssigkeit (R) zu der Düse (24), aufweist.

3. Tischlüfter nach Anspruch 2, **dadurch gekennzeichnet, dass** das Reservoir (22) zumindest bereichsweise unterhalb des Filterelementes (32) zum Auffangen von Reinigungsflüssigkeit (R) von dem Filterelement (32) angeordnet ist.

4. Tischlüfter nach Anspruch 1 bis 3, **dadurch gekennzeichnet, dass** die Reinigungsvorrichtung (2) zumindest ein Heizelement (24) zum zeitweisen Erwärmen der Reinigungsflüssigkeit (R) aufweist.

5. Tischlüfter nach einem der Ansprüche 1 bis 4, **dadurch gekennzeichnet, dass** die Reinigungsvorrichtung (2) mindestens einen Zufuhranschluss (25) zur Zuleitung von Reinigungsflüssigkeit (R) in den Reinigungskreislauf (21) und mindestens einen Ableitungsanschluss (29) zum Ableiten von Reinigungsflüssigkeit (R) aus dem Reinigungskreislauf (21) aufweist.

6. Tischlüfter nach einem der Ansprüche 2 bis 5, **dadurch gekennzeichnet, dass** das Reservoir (22) durch den unteren Bereich des Filterraumes (30) gebildet wird oder unterhalb des Filterraumes (30) durch einen separaten Behälter gebildet wird.

7. Tischlüfter nach einem der Ansprüche 1 bis 6, **dadurch gekennzeichnet, dass** der Tischlüfter (10) eine Abdeckung (34) aufweist, die den Filterraum (30) zumindest zeitweise nach oben abschließt und vorzugsweise zumindest eine Klappe (35) aufweist, die den Filterraum (30) gegenüber einem Absaugrohr (31) abschließt.

8. Tischlüfter nach einem der Ansprüche 1 bis 7, **dadurch gekennzeichnet, dass** der Tischlüfter (10) zumindest eine Steuereinheit zum automatischen Reinigen des mindestens einen Filterelementes (32) durch die Reinigungsvorrichtung (2) aufweist.

9. Verfahren zur Reinigung eines Tischlüfters gemäß einem der Ansprüche 1 bis 8, **dadurch gekennzeichnet, dass** das Verfahren die Schritte
- des Pumpens der Reinigungsflüssigkeit (R) zu mindestens einer Düse (24) und Besprühen zumindest des Filterelementes (32) mit der Reinigungsflüssigkeit (R),
- dem Auffangen von Reinigungsflüssigkeit (R) von dem Filterelement (32), und
- weiteres Pumpen der Reinigungsflüssigkeit (R) zu der mindestens einen Düse (24) umfasst.

10. Verfahren nach Anspruch 9, **dadurch gekennzeichnet, dass** das Verfahren den Schritt des Abführens der Reinigungsflüssigkeit (R) aus dem Reinigungskreislauf (21) nach mindestens einem Durchgang der Schritte gemäß Anspruch 10 gefolgt von einem Schritt des Zuleitens weiterer Reinigungsflüssigkeit (R) in den Reinigungskreislauf (21) und von mindestens einem weiteren Durchgang der Schritte nach Anspruch 10 umfasst.

11. Verfahren nach einem der Ansprüche 9 oder 10, **dadurch gekennzeichnet, dass** das Verfahren den Schritt der Zugabe eines Reinigungsmittels (RM) in den Reinigungskreislauf (21) umfasst, vorzugsweise der Zugabe eines Mehrkomponenten-Reinigungsmittels in das Reservoir (22).

12. Verfahren nach einem der Ansprüche 9 bis 11, **dadurch gekennzeichnet, dass** das Verfahren den Schritt des Erwärmens der Reinigungsflüssigkeit (R) umfasst.

13. Verfahren nach einem der Ansprüche 9 bis 12, **dadurch gekennzeichnet, dass** das Verfahren den Schritt des Trocknens des Zirkulationssystems (20) umfasst, in dem zumindest das Filterelement (32) getrocknet wird.

14. Verfahren nach einem der Ansprüche 9 bis 13, **dadurch gekennzeichnet, dass** das Verfahren entsprechend einem in einer Steuereinheit gespeicherten Programm automatisch ausgeführt wird.

## Claims

1. Table fan comprising a fan and a suction opening (33) via which air is suctioned downwards, and a filter chamber (30) having at least one filter element (32), wherein the table fan (10) comprises a cleaning device (2) which has a circulation system (20) for guiding cleaning liquid (R) in a cleaning circuit (21) and at least one portion of the filter element (32) is located in the cleaning circuit (21), **characterised in that** the filter chamber (30) consists of two housing parts (300, 301) and the suction opening (33), in which the filter element is arranged, is formed in a housing part (301) which is extendable upwards at least in some areas.

2. Table fan according to claim 1, **characterised in that** the circulation system (20) of the cleaning device (2) has a reservoir (22) for the cleaning liquid (R),
at least one nozzle (24) directed at least temporarily at the at least one filter element (32),
at least one pump (27) for pumping the cleaning liquid (R) to the at least one nozzle (24),
and at least one connecting line (23) between the reservoir (22) and the at least one nozzle (24) for supplying cleaning liquid (R) to the nozzle (24).

3. Table fan according to claim 2, **characterised in that** the reservoir (22) is arranged at least in some areas beneath the filter element (32) for receiving cleaning liquid (R) from the filter element (32).

4. Table fan according to claim 1 to 3, **characterised in that** the cleaning device (2) has at least one heating element (24) for temporary heating of the cleaning liquid (R).

5. Table fan according to one of claims 1 to 4, **characterised in that** the cleaning device (2) has at least one supply connection (25) for supplying cleaning liquid (R) to the cleaning circuit (21) and at least one outlet connection (29) for draining cleaning liquid (R) from the cleaning circuit (21).

6. Table fan according to one of claims 2 to 5, **characterised in that** the reservoir (22) is formed by the lower area of the filter chamber (30) or is formed by a separate container beneath the filter chamber (30).

7. Table fan according to one of claims 1 to 6, **characterised in that** the table fan (10) has a cover (34) which closes the filter chamber (30) at the top at least temporarily, and preferably at least one damper (35) which closes the filter chamber (30) in respect of a suction pipe (31).

8. Table fan according to one of claims 1 to 7, **characterised in that** the table fan (10) has at least one control unit for automatic cleaning of the at least one filter element (32) by the cleaning device (2).

9. Method for cleaning a table fan according to one of claims 1 to 8, **characterised in that** the method comprises the steps of
- Pumping the cleaning liquid (R) to at least one nozzle (24) and spraying at least the filter element (32) with the cleaning liquid (R),
- Collecting of cleaning liquid (R) by the filter element (32), and
- Further pumping of the cleaning liquid (R) to the at least one nozzle (24).

10. Method according to claim 9, **characterised in that** the method comprises the step of removing the cleaning liquid (R) from the cleaning circuit (21) after going through the steps according to claim 10 at least once, followed by a step of supplying further cleaning liquid (R) in the cleaning circuit (21), and by going through the steps according to claim 10 at least once more.

11. Method according to one of claims 9 or 10, **characterised in that** the method comprises the step of adding a cleaning agent (RM) to the cleaning circuit (21), preferably adding a multi-component cleaning agent to the reservoir (22).

12. Method according to one of claims 9 to 11, **characterised in that** the method comprises the step of heating the cleaning liquid (R).

13. Method according to one of claims 9 to 12, **characterised in that** the method comprises the step of drying the circulation system (20), in which at least the filter element (32) is dried.

14. Method according to one of claims 9 to 13, **characterised in that** the method is automatically executed according to a program stored in a control unit.

## Revendications

1. Ventilateur de table comprenant une soufflante et une ouverture d'aspiration (33), par l'intermédiaire de laquelle l'air est aspiré vers le bas, et une chambre de filtration (30) comprenant au moins un élément filtrant (32),
dans lequel le ventilateur de table (10) comprend un dispositif de nettoyage (2), qui comprend un système de circulation (20) servant à guider du liquide de nettoyage (R) dans un circuit de nettoyage (21) et au moins une partie de l'élément filtrant (32) est située dans le circuit de nettoyage (21),
**caractérisé en ce que** la chambre de filtration (30) est composée de deux parties de boîtier (300, 301) et l'ouverture d'aspiration (33), dans laquelle l'élément filtrant est disposé, est formée dans une partie de boîtier (301), qui est extensible vers le haut au moins par endroits.

2. Ventilateur de table selon la revendication 1, **caractérisé en ce que** le système de circulation (20) du dispositif de nettoyage (2) comprend :
un réservoir (22) pour le liquide de nettoyage (R),
au moins une buse (24) dirigée au moins temporairement sur l'au moins un élément filtrant (32),
au moins une pompe (27) pour pomper le liquide de nettoyage (R) vers l'au moins une buse (24), et
au moins une conduite de raccordement (23) entre le réservoir (22) et l'au moins une buse (24) pour amener du liquide de nettoyage (R) jusqu'à la buse (24).

3. Ventilateur de table selon la revendication 2, **caractérisé en ce que** le réservoir (22) est disposé au moins en partie en dessous de l'élément filtrant (32) pour collecter le liquide de nettoyage (R) provenant de l'élément filtrant (32).

4. Ventilateur de table selon l'une des revendications 1 à 3, **caractérisé en ce que** le dispositif de nettoyage (2) comprend au moins un élément chauffant (24) pour chauffer temporairement le liquide de nettoyage (R).

5. Ventilateur de table selon l'une des revendications 1 à 4, **caractérisé en ce que** le dispositif de nettoyage (2) comprend au moins un raccordement d'alimentation (25) pour amener du liquide de nettoyage (R) dans le circuit de nettoyage (21) et au moins un raccordement d'évacuation (29) pour évacuer le liquide de nettoyage (R) du circuit de nettoyage (21).

6. Ventilateur de table selon l'une des revendications 2 à 5, **caractérisé en ce que** le réservoir (22) est formé par la partie inférieure de la chambre de filtration (30) ou est formé en dessous de la chambre de filtration (30) par un récipient séparé.

7. Ventilateur de table selon l'une des revendications 1 à 6, **caractérisé en ce que** le ventilateur de table (10) comprend un capot (34), qui ferme vers le haut la chambre de filtration (30) au moins temporairement et comprend de préférence au moins un clapet (35), qui ferme la chambre de filtration (30) vis-à-vis d'un tuyau d'aspiration (31).

8. Ventilateur de table selon l'une des revendications 1 à 7, **caractérisé en ce que** le ventilateur de table (10) comprend au moins une unité de commande servant à nettoyer automatiquement l'au moins un élément filtrant (32) par le dispositif de nettoyage (2).

9. Procédé de nettoyage d'un ventilateur de table selon l'une des revendications 1 à 8, **caractérisé en ce que** le procédé comprend les opérations suivantes :
- pompage du liquide de nettoyage (R) vers au moins une buse (24) et aspersion d'au moins l'élément filtrant (32) avec le liquide de nettoyage (R),
- collecte du liquide de nettoyage (R) provenant de l'élément filtrant (32), et
- poursuite du pompage du liquide de nettoyage (R) vers l'au moins une buse (24).

10. Procédé selon la revendication 9, **caractérisé en ce que** le procédé comprend une opération d'évacuation du liquide de nettoyage (R) hors du circuit de nettoyage (21) après au moins un cycle des opérations selon la revendication 10 suivie d'une opération d'amenée de liquide de nettoyage supplémentaire (R) dans le circuit de nettoyage (21) et d'au moins un cycle supplémentaire des opérations selon la revendication 10.

11. Procédé selon l'une des revendications 9 ou 10, **caractérisé en ce que** le procédé comprend une opération d'introduction d'un agent de nettoyage (RM) dans le circuit de nettoyage (21), de préférence l'introduction d'un agent de nettoyage à plusieurs composantes dans le réservoir (22).

12. Procédé selon l'une des revendications 9 à 11, **caractérisé en ce que** le procédé comprend une opération de chauffage du liquide de nettoyage (R).

13. Procédé selon l'une des revendications 9 à 12, **caractérisé en ce que** le procédé comprend une opération de séchage du système de circulation (20), dans laquelle au moins un élément filtrant (32) est séché.

14. Procédé selon l'une des revendications 9 à 13, **caractérisé en ce que** le procédé est exécuté automatiquement selon un programme enregistré dans une unité de commande.
